# EUROPÄISCHE PATENTSCHRIFT

(11) **EP 0 446 612 B1**
(45) Veröffentlichungstag und Bekanntmachung des Hinweises auf die Patenterteilung: **06.12.1995**
(21) Anmeldenummer: 91101736.6
(22) Anmeldetag: 08.02.1991
(51) Int. Cl.: H04N 7/22, H04N 7/24, H04J 1/04

(54) **Verfahren zur Aufbereitung von mehreren Fernsehsignalen für Übertragungszwecke sowie Anwendung**
Method for the preparation of several television signals for transmission purposes and applications
Procédé pour la préparation de plusieurs signaux de télévision pour des objets et applications de transmission

(30) Priorität: 15.03.1990 DE 4008201
(43) Veröffentlichungstag der Anmeldung: 18.09.1991
(73) Patentinhaber: ANT Nachrichtentechnik GmbH, D-71522 Backnang (DE)
(72) Erfinder: Süssmeier, Georg, Dipl.-Ing., W-7150 Backnang (DE); Grotz, Karlheinz, Dipl.-Ing. (FH), W-7012 Fellbach (DE); Krull, Klaus, Dipl.-Ing, (FH), W-7153 Weissach im Tal (DE)

(56) Entgegenhaltungen:
- EP-A- 0 324 954
- DE-A- 3 242 028
- DE-A- 3 707 243
- US-A- 3 676 598
- 13TH INT. TV SYMPOSIUM 1. Juni 1983, MONTREUX Seiten 16 - 26; W K RITCHIE: 'AN INTEGRATED SERVICES CABLE-TV NETWORK'
- 13TH INT. TV SYMPOSIUM 1. Juni 1983, MONTREUX Seiten 56 - 67; G MOGENSEN: 'TV-TRANSMISSION ON OPTICAL FIBRES'
- SIXTH EUROPEAN CONFERENCE ON OPTICAL COMMUNICATION 19. September 1980, YORK Seiten 406 - 409; P. TOLSTRUP NIELSEN ET AL.: 'A TRUNK SYSTEM FOR CATV USING OPTICAL TRANSMISSION AT 140 MB/S'

## Beschreibung

Die Erfindung betrifft ein Verfahren zur Aufbereitung von mehreren Fernsehsignalen für Übertragungszwecke sowie Anwendung.

Für die Fernsehprogrammübertragung über Breitbandkabel-Verteilnetze werden Fernsehsignale zunächst in einer Zwischenfrequenzlage aufbereitet, bevor sie nach erneuter Umsetzung im Übertragungsfrequenzbereich, beispielsweise zwischen 40 und 450 MHz übertragen werden.

Aus der DE-C-37 07 243 oder aus Wissenschaftliche Berichte AEG-Telefunken 53 (1980), 1-2, Seiten 62 bis 71 ist es im Zusammenhang mit einer Digitalsignalübertragung von Fernsehsignalen, beispielsweise über Lichtwellenleiter bekannt, die in Zwischenfrequenzlage vorliegenden Fernsehsignale einzeln mittels A/D-Wandlern zu digitalisieren und mittels eines Multiplexers zu einem digitalen Zeitmultiplexsignal für die Übertragung zusammenzufassen. Nach der Übertragung wird dieses Zeitmultiplexsignal mittels eines Demultiplexers in Einzelsignale zerlegt. Diese Einzelsignale werden jeweils einzeln mittels D/A-Wandlern in Analogsignale zurückverwandelt und in eine gewünschte Frequenzlage (Kanalraster) umgesetzt.

Aus Cable Television Engineering, Vol. 14, No.4, September 1988, Seiten 579 bis 583, ist es bekannt eine Vielzahl von analogen Video-Quellsignalen Zu digitalisieren, zu einem Zeitmultiplexsignal zusammenzufassen, und nach elektrisch/optischer Wandlung über ein optisches Verteilnetz zu übertragen. Teilnehmerseitig erfolgt eine optisch/elektrische Rückwandlung, eine D/A-Wandlung und eine Umsetzung, beispielsweise in den UHF-Bereich.

Für die Übertragung ganzer Fernsehsignal-Kanalgruppen über ein Lichtwellenleiterzubringer oder- verteilnetz sind analoge Signalaufbereitungen im Frequenzmultiplex bekannt (Funkschau 15/1989, Seiten 57 bis 62; DE-C-32 03 785).

Aus der DE-A-32 42 028 ist ebenfalls ein analoges Übertragungsverfahren über Lichtwellenleiter bekannt. Dort werden Fernsehsignale in n nicht überlappende Frequenzbänder umgesetzt, jeweils elektro-optisch gewandelt und im Raummultiplex über n Lichtwellenleiter übertragen. Empfangsseitig werden die n parallel übertragenen Signale zu einem optischen Multiplexsignal zusammengefaßt, elektrooptisch gewandelt und zum Fernsehtuner weitergeleitet.

Die US-A-3676 598 zeigt ein Frequenzmultiplex-Modulationssystem, bei welchem Kanalsignale A/D gewandelt werden und diese Signale im Zeitmultiplex zu einer Modulationsstufe geführt werden. Diese Modulationsstufe erhält im Zeitmultiplex synchron zur Durchschaltung der digitalisierten Kanalsignale Modulationsträger unterschiedlicher Frequenzen, so daß an deren Ausgang ein Frequenzmultiplexsignal erscheint. Dieses Signal wird anschließend nach digitaler Filterung wieder D/A gewandelt.

Aufgabe der Erfindung ist es eine auch für hohe Qualitätsanforderungen brauchbare digitale Fernsehsignalaufbereitung anzugeben, bei der insbesondere der empfangsseitige Aufwand gering gehalten werden kann. Diese Aufgabe wird durch die Merkmale des Patentanspruchs 1 gelöst.

Die Unteransprüche zeigen vorteilhafte Weiterbildungen auf, bzw. der Anspruch 7 eine Anwendung des Verfahrens.

Die Erfindung weist folgende Vorteile auf:

Im Gegensatz zur analogen Signalaufbereitung erhöht sich bei der digitalen Signalaufbereitung gemäß der Erfindung die Übertragungsreichweite wegen des günstigeren S/N-Verhältnisses. Auch sind mehr optische Empfänger pro elektro-optischem Wandler (Laser) anschließbar. Hohe Linearität des elektro-optischen Wandlers (Lasers) ist nicht erforderlich, wodurch kostengünstigere Laserbauelemente verwendet werden können.

Bei digitaler Aufbereitung von Fernsehsignalen wurden die einzelnen analogen Fernsehsignale bzw. geträgerten Fernsehsignale bisher einzeln aufbereitet und für die Übertragung zu einem Zeitmultiplexsignal zusammengefaßt. Auf der Empfangsseite mußte das Zeitmultiplexsignal mit unter Umständen hohem Aufwand in ein Frequenzmultiplexsignal gewandelt werden. Da bei der Erfindung die Übertragung eines digital aufbereiteten Frequenzmultiplexsignals für eine Gruppe von Fernsehsignalen erfolgt, ist die Signalaufbereitung auf der Empfangsseite sehr aufwandsarm, insbesondere ist hier keine zusätzliche Frequenzmultiplexaufbereitung notwendig. Da in einem Kabelfernsehverteilnetz üblicherweise sehr viele Empfänger angeschlossen sind, wirkt sich die Aufwandsminimierung auf der Empfangsseite unter wirtschaftlichen Gesichtspunkten stark aus. Auf der Empfangsseite ist außerdem im Gegensatz zu bekannten Lösungen nur ein D/A-Wandler für eine ganze Kanalgruppe notwendig. Auch ist das Verfahren nach der Erfindung aufwärtskompatibel.

Bei einer späteren sendeseitigen Umrüstung auf Mehrkanalverarbeitung mit einem einzigen A/D-Wandler höherer Auflösung und höherer Abtastrate sowie geringen harmonischen Störungen können die Empfangseinrichtungen unverändert weiterbenutzt werden. Als Fernsehsignale lassen sich mit dem Verfahren nach der Erfindung sowohl geträgerte Fernsehsignale als auch FBAS- oder Komponentensignale aufbereiten. Bei FBAS- oder Komponentensignalen ist jedoch sendeseitig eine digitale Modulation notwendig.

Anhand der Zeichnungen wird nun das Verfahren nach der Erfindung anhand eines Ausführungsbeispiels beschrieben. Es zeigen:
- Figur 1: die Aufbereitung einer Gruppe von 8 Fernsehsignalen,
- Figur 2: die Signalspektren bei der Fernsehsignalumsetzung,
- Figur 3: ein vergrößerter Ausschnitt aus der ersten Zeile des Frequenzplans gemäß Figur 2,
- Figur 4: die Aufbereitung von geträgerten FBAS- oder Komponentensignalen,
- Figur 5: die Aufbereitung mehrerer Kanalgruppen.

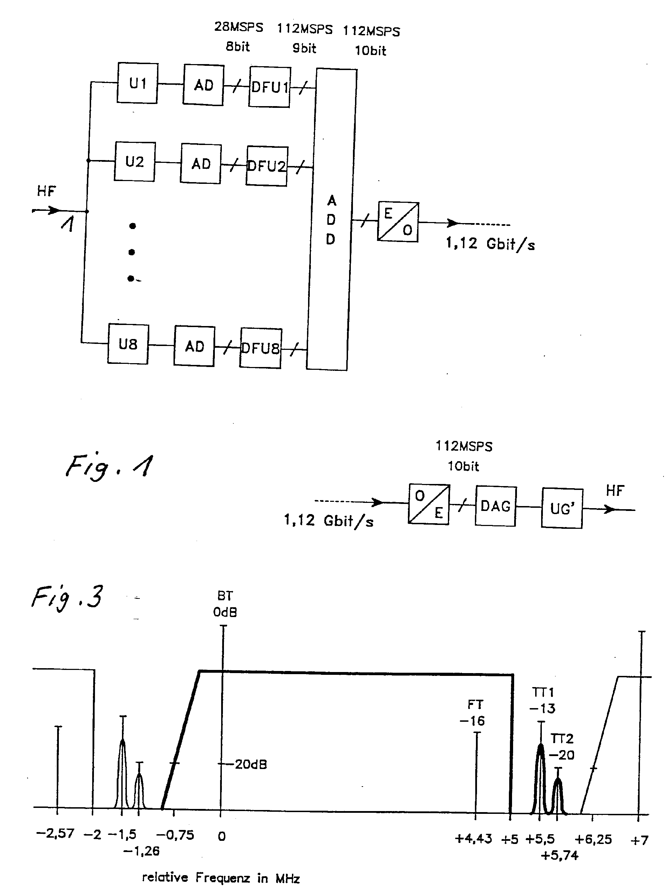

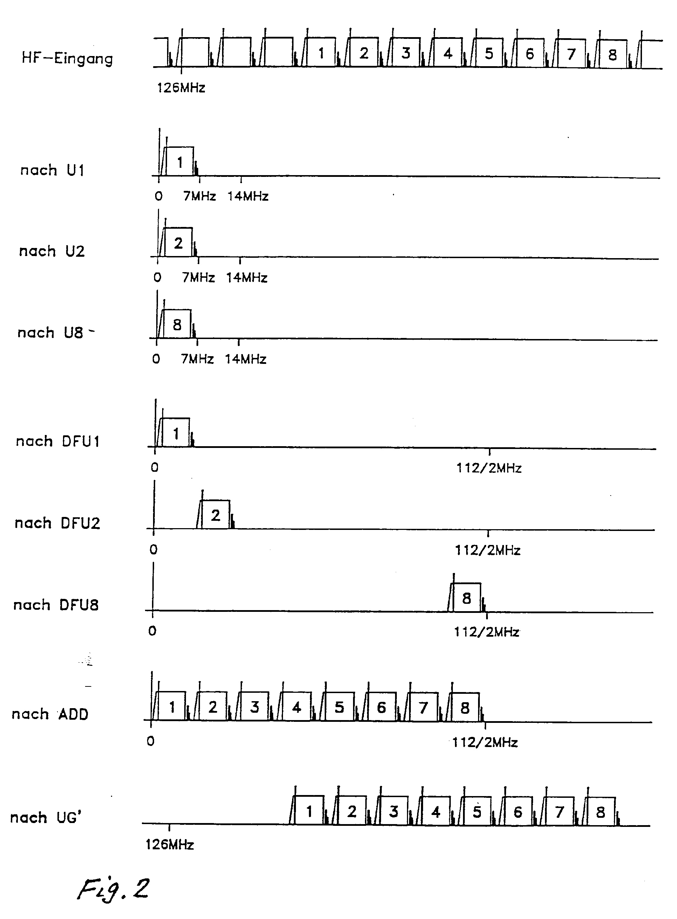

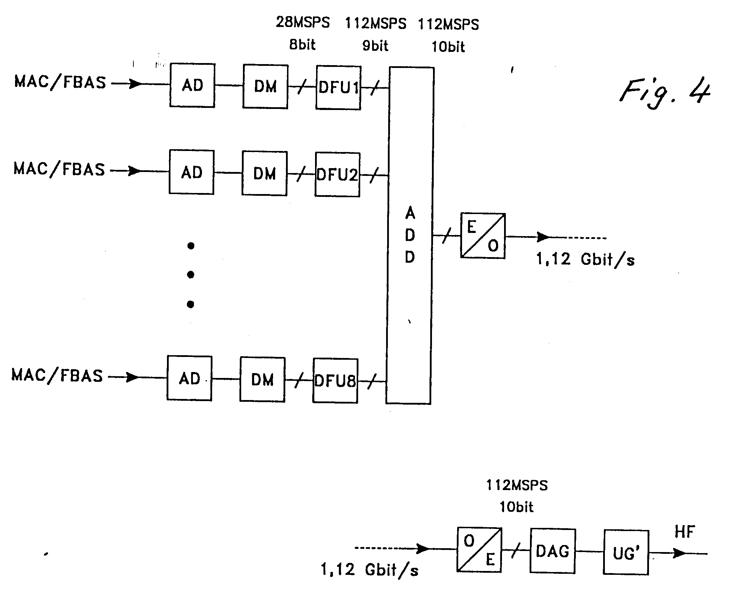

Figur 1 zeigt schematisch die Aufbereitung einer Gruppe von 8 Fernsehsignalen, beispielsweise einer Kanalgruppe in HF-Lage oberhalb von 126 MHz, deren Frequenzplan in Figur 2, Zeile 1 dargestellt ist. Die einzelnen Kanäle sind mit den Ziffern 1 bis 8 durchnumeriert. Jeder Einzelkanal ist 7 MHz breit (Bildträgerabstand). Figur 3 zeigt einen Ausschnitt aus diesem Frequenzplan vergrößert, wobei zur Vereinfachung nur relative Frequenzen in MHz bezogen auf den Bildträger BT eines Fernsehkanals angegeben sind. Dargestellt ist der Amplitudengang dieses Fernsehkanals mit Bildträger BT, Nyquistflanke bei - 0,75 MHz, Farbträger FT bei + 4,43 MHz, sowie zwei Tonträgern TT1 und TT2 mit der üblichen Amplitudenabsenkung.

Die bei Punkt 1 angelieferte Kanalgruppe in HF-Lage wird kanalweise beispielsweise in eine für die A/D-Wandlung günstige Zwischenfrequenzlage umgesetzt mittels der Umsetzer U1, U2...U8. Figur 2, Zeilen 2 bis 4 zeigen eine Umsetzung in den Frequenzbereich von 0 bis 7 MHz. Die Abtastung erfolgt hier zweckmäßigerweise mit 14 MHz.

Für jeden in die Zwischenfrequenzlage umgesetzten Kanal erfolgt eine Analog-Digitalwandlung mittels A/D-Wandlern, die in Figur 1 mit AD bezeichnet sind. Die Abtastung bei der A/D-Wandlung erfolgt geschlossen für Video- und Tonanteile des Fernsehsignals.

Die A/D-gewandelten Einzelkanäle werden durch die Baugruppen DFU1, DFU2,...DFU8 jeweils digital in verschiedene Frequenzbereiche umgesetzt, wobei die Umsetzung so vorgenommen wird, daß sich zumindest die Nutzsignalanteile der Fernsehsignale frequenzmäßig nicht überlappen. Figur 2, Zeilen 5 bis 7 (nach DFU1 bis nach DFU8) zeigt wie die digitalisierten Fernsehsignale nach der digitalen Frequenzumsetzung im Frequenzraster liegen: Kanal 1 zwischen 0 und 7 MHz, Kanal 2 zwischen 7 und 14 MHz,... Kanal 8 zwischen 49 und 56 MHz. Die digitale Frequenzumsetzung kann beispielsweise wie in der DE-C-37 16 018 aufgezeigt vorgenommen werden, nämlich mittels einer Filterbank bestehend aus einem Transversalfilter pro umzusetzenden Kanal. Es werden wie in der DE-C-37 16 018 dargelegt erhöhte Abtastraten benutzt. Das Spektrum der sich nicht überlappenden jedoch frequenzmäßig lückenlos aneinander anschließenden digital umgesetzten Einzelkanäle reicht dann bis zur Nyquistfrequenz 112/2 MHz (Figur 2).

Mittels einer logischen Addierstufe ADD werden die digital in die verschiedenen Frequenzbereiche umgesetzten Einzelkanäle zu einem Frequenzmultiplexsignal (Figur 2, Zeile 8, nach ADD) in Form einer Kanalgruppe 1...8 zusammengefügt. Dieses Frequenzmultiplexsignal wird für die Übertragung über ein Lichtwellenleiterverteil- und/oder -zubringernetz mittels eines Wandlers E/O elektro-optisch gewandelt und in Form eines 1,12 Gbit/s Datenstromes übertragen. Empfangsseitig sind im Falle eines Verteilnetzes, das eine Vielzahl optischer Verzweigungspunkte aufweist eine Vielzahl von "Empfängern" vorgesehen, wobei sich ein solcher Empfänger sowohl in einer Teilnehmergruppenschalteinheit eines Kabelfernsehnetzes, die ganze Wohngebiete oder z.B. nur ein Mehrfamilienhaus versorgt, als auch im Endgerät eines Teilnehmers direkt befinden. Ein solcher "Empfänger" besteht aus einem opto-elektronischen Wandler O/E, einer digital-analogen Signalaufbereitung DAG für die gesamte Kanalgruppe, bestehend aus den 8 Einzelkanälen und gegebenenfalls einem Kanalgruppen-Umsetzer UG' zur Umsetzung der gesamten Kanalgruppe in die HF-Lage, beispielsweise den UHF-Bereich des Teilnehmergeräts. Nach der Umsetzung liegen die Kanäle in der ursprünglichen HF-Lage vor (Figur 2, erste und letzte Zeile).

Da die Kanäle als Frequenzmultiplexsignal übertragen wurden, kann empfangsseitig die gesamte Kanalgruppe mit einem einzigen D/A-Wandler und einem einzigen Frequenzumsetzer (Kanalgruppen-Umsetzer) in die gewünschte HF-Lage gebracht werden. Auf diese Weise ist der empfängerseitige Aufwand bezüglich D/A-Wandlern, Filterstufen und Frequenzumsetzern minimiert.

Als A/D-Wandler ist die integrierte Baugruppe TDC 1048 von TRW LSI Products Inc. verwendbar, dessen Abtastrate 28 MSPS (Mega Samples per second) laut Datenblatt 1988 beträgt.

In Figur 1 sind über den einzelnen Baugruppen die Abtastraten in MSPS mit der Wortbreite in Bit angegeben. Die Wortbreiten sind in Übertragungsrichtung zunehmend gewählt, um Rundungsfehler bei der digitalen Frequenzumsetzung - mehrstufige Transversalfilterung - nicht zu unterdrücken.

Statt geträgerter Fernsehkanalsignale können auch FBAS- oder Komponentensignale, z.B. MAC-Signale, nach dem Verfahren der Erfindung aufbereitet werden. Die Frequenzumsetzung mittels der Umsetzer U1, U2,...U8 ist dann zwar entbehrlich, jedoch müssen die A/D-gewandelten Signale durch digitale Modulation mittels digitaler Modulatoren DM zuerst zu geträgerten Signalen aufbereitet werden. Danach kann die digitale Frequenzumsetzung mittels der Baugruppen DFU1, DFU2,...DFU8 vorgenommen werden (Figur 4). Die übrigen Baugruppen auf der Sendeseite können unverändert bleiben. Empfangsseitig sind überhaupt keine Änderungen notwendig.

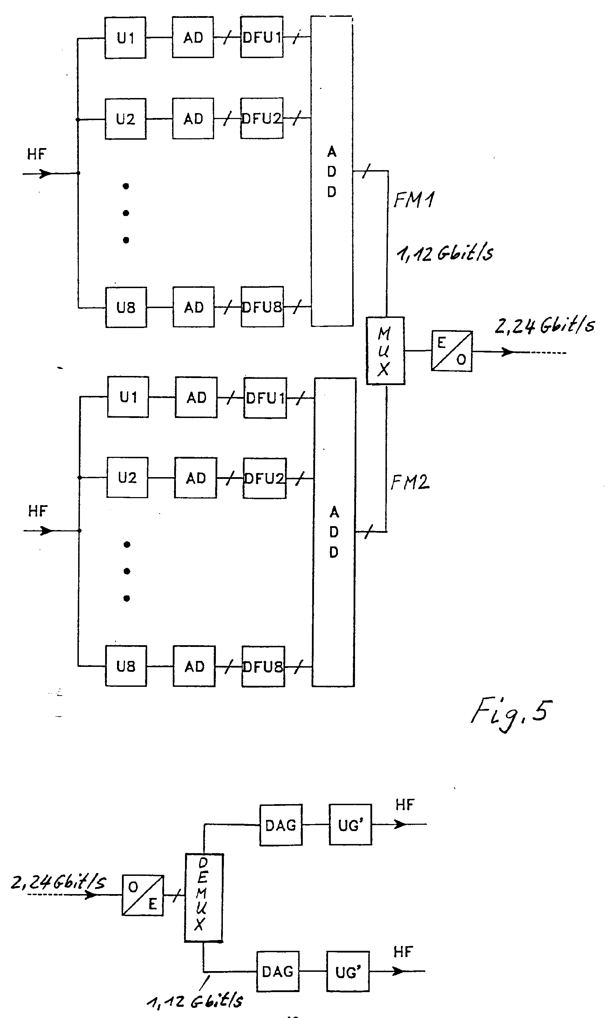

Die Signalaufbereitung gemäß der Erfindung eignet sich auch zur Aufbereitung von mehr als einer Kanalgruppe. Wie Figur 5 zeigt, können zwei oder mehr Kanalgruppen wie zuvor geschildert jeweils getrennt zu einer Frequenzmultiplexsignalgruppe zusammengefügt werden. Die so gebildeten Frequenzmultiplexsignalgruppen FM1 und FM2 können mittels eines Multiplexers MUX zu einem Zeitmultiplexsignal zusammengefaßt werden. Diese Variante ist zwar nicht empfangskompatibel mit den zuvor vorgestellten Ausführungsformen, führt jedoch dann zu einer ähnlichen Minimierung des empfängerseitigen Aufwandes, wenn die Trennung des Zeitmultiplexsignals mittels eines Demultiplexers DEMUX in die Frequenzmultiplexgruppensignale in einer höheren Netzebene des Verteilnetzes, z.B. in der B-Ebene (vgl. Anlageband 5 zum Telekommunikationsbericht, Bundesministerium für das Post- und Fernmeldewesen, 1976, Seiten 175 und 176) erfolgt.

## Patentansprüche

1. Verfahren zur Aufbereitung von mehreren Fernsehsignalen mit folgenden Schritten:
- die aufzubereitenden Fernsehsignale werden einzeln mittels A/D-Wandlern (AD) digitalisiert,
- die einzeln digitalisierten Fernsehsignale werden durch Abtastratenerhöhung und Filterung jeweils digital in verschiedene Frequenzbereiche umgesetzt (DFU1, DFU2,...DFU8), wobei die Umsetzung so vorgenommen wird, daß sich zumindest die Nutzsignalanteile der Fernsehsignale frequenzmäßig nicht überlappen,
- die so umgesetzten Fernsehsignale werden durch digitale Addition (ADD) zu einem Frequenzmultiplexsignal zusammengefügt.

2. Verfahren nach Anspruch 1, dadurch gekennzeichnet, daß die Schritte des Anspruchs 1 zumindest zur Bildung eines weiteren digitalen Frequenzmultiplexsignals durchgeführt werden und daß die dabei gebildeten Gruppen von Frequenzmultiplexsignalen (FM1,FM2) zu einem Zeitmultiplexsignal (MUX) aufbereitet werden.

3. Verfahren nach Anspruch 1 oder 2, dadurch gekennzeichnet, daß die aufzubereitenden Fernsehsignale vor der Digitalisierung (AD), insbesondere dann, wenn es sich um geträgerte Fernsehsignale handelt, in einen für die A/D-Wandlung oder die digitale Frequenzumsetzung günstigen Frequenzbereich umgesetzt (U1,U2,...U8) werden.

4. Verfahren nach einem der Ansprüche 1 bis 3, dadurch gekennzeichnet, daß bei Fernsehsignalen, insbesondere in Form von FBAS- oder Komponentensignalen, nach der A/D-Wandlung eine digitale Modulation (DM) vorgenommen wird.

5. Verfahren nach einem der Ansprüche 1,3 oder 4, dadurch gekennzeichnet, daß das aufbereitete Frequenzmultiplexsignal übertragen wird und nach der Übertragung eine Digital-Analogwandlung mittels nur eines D/A-Wandlers (DAG) vorgenommen wird.

6. Verfahren nach Anspruch 5, dadurch gekennzeichnet, daß nach der Digital-Analogwandlung (DAG) eine Frequenzumsetzung in eine HF-Kanalgruppe mittels eines Frequenzumsetzers (UG') vorgenommen wird.

7. Anwendung des Verfahrens nach einem der Ansprüche 1 bis 6 für die Signalübertragung mittels Lichtwellenleitern in einem Kabelfernsehzubringer- und/oder -verteilnetz.

## Claims

1. Method for conditioning a plurality of television signals having the following steps:
- the television signals to be conditioned are digitized individually by means of A/D converters (AD),
- the television signals which are digitized individually are in each case digitally converted to different frequency bands (DFU1, DFU2, ... DFU8) by increasing the sampling rate and filtering, the conversion being carried out such that at least the useful signal elements of the television signals do not overlap in terms of frequency,
- the television signals converted in this way are joined together, by digital addition (ADD), to form a frequency-division multiplex signal.

2. Method according to Claim 1, characterized in that the steps of Claim 1 are carried out at least in order to form a further digital frequency-division multiplex signal, and in that the groups of frequency-division multiplex signals (FM1, FM2) which are formed in this case are conditioned to form a time-division multiplex signal (MUX).

3. Method according to Claim 1 or 2, characterized in that the television signals to be conditioned are converted (U1, U2, ... U8), before digitization (AD) and, in particular, whenever they are television signals on a carrier, to a frequency band which is favourable for A/D conversion or for the digital frequency conversion.

4. Method according to one of Claims 1 to 3, characterized in that digital modulation (DM) is carried out after the A/D conversion in the case of television signals, in particular in the form of composite video signals or component signals.

5. Method according to one of Claims 1, 3 or 4, characterized in that the conditioned frequency-division multiplex signal is transmitted and, after the transmission, a digital/analogue conversion is carried out by means of only one D/A converter (DAG).

6. Method according to Claim 5, characterized in that, after the digital/analogue conversion (DAG), a frequency conversion is carried out to an RF channel group by means of a frequency converter (UG').

7. Use of the method according to one of Claims 1 to 6 for signal transmission by means of optical conductors in a cable television supplier and/or distribution network.

## Revendications

1. Procédé pour préparer plusieurs signaux vidéo comprenant les étapes suivantes :
- on numérise les différents signaux vidéo préparés, séparément à l'aide de convertisseurs analogiques/numériques (AD),
- on effectue par augmentation de la vitesse de détection et filtrage sur les différents signaux vidéo numérisés, une conversion dans les différentes plages de fréquences (DFU1, DFU2 ... DFU8), la conversion étant faite de manière qu'au moins les parties de signaux utiles des signaux vidéo ne se chevauchent pas en fréquence,
- les signaux vidéo ainsi convertis sont réunis en un signal multiplex de fréquence par addition numérique (ADD).

2. Procédé selon la revendication 1, caractérisé en ce que les étapes de la revendication 1 au moins pour former un autre signal numérique multiplexé en fréquence, sont effectuées en ce que les groupes ainsi formés de signaux multiplex de fréquence (FM1, FM2) sont préparés pour donner un signal multiplexé dans le temps (MUX).

3. Procédé selon la revendication 1 ou 2, caractérisé en ce que les signaux vidéo à préparer sont traités en particulier avant la numérisation (AD), notamment s'il s'agit d'un signal vidéo à porteuse, dans une plage de fréquences peu favorable à la conversion analogique/numérique ou à la conversion numérique de fréquence pour la plage de fréquences (U1, U2 ... U8).

4. Procédé selon l'une des revendications 1 à 3, caractérisé en ce que pour des signaux vidéo en particulier sous la forme de signaux à composante ou signaux FBAS, après conversion analogique/numérique, on effectue une modulation numérique (DM).

5. Procédé selon l'une des revendications 1, 3 ou 4, caractérisé en ce que le signal multiplex de fréquence préparé est transmis par transmission d'une conversion numérique/analogique à l'aide seulement d'un convertisseur numérique/analogique (DAG).

6. Procédé selon la revendication 5, caractérisé en ce qu'après conversion numérique/analogique (DAG), on effectue une conversion de fréquence dans un groupe de canaux HF à l'aide d'un convertisseur de fréquence (UG').

7. Application du procédé selon l'une des revendications 1 à 6 pour la transmission de signaux à l'aide de guides de lumière dans un circuit distributeur et/ou un moyen d'alimentation en télévision câblé.
